# EUROPEAN PATENT APPLICATION

(11) **EP 4 606 671 A1**
(43) Date of publication of application: **27.08.2025**
(21) Application number: 25158883.6
(22) Date of filing: 19.02.2025
(51) Int. Cl.: B60W 50/029, B60W 60/00

(54) **AUTONOMOUS VEHICLE TRAJECTORY PLANNING METHOD AND SYSTEM INCLUDING A FALLBACK RESPONSE**

(30) Priority: 22.02.2024 US 202418584860
(71) Applicant: Waymo LLC, Mountain View, CA 94043 (US)
(72) Inventor: LUNA, Ryan James, Mountain View, CA 94043 (US); BRADLEY, David McAllister, Mountain View, CA 94043 (US); GAO, Xiang, Mountain View, CA 94043 (US)
(74) Representative: Chettle, John Edward

(57) **Abstract**

The invention relates to method, comprising: periodically receiving updates to a planned trajectory (310) and updates to a fallback trajectory (314) from a planning system (130) of an autonomous vehicle AV (100), wherein the planned trajectory (310) is a trajectory to a planned location of the AV and the fallback trajectory (314) is a trajectory to a fallback stopping location (312) in an environment of the AV; causing the AV to operate according to the updates to the planned trajectory (310); and upon determining that a threshold amount of time has passed since receiving a last update to the planned trajectory (310) from the planning system (130) of the AV, autonomously modifying operation of the AV according to a last update of the fallback trajectory (314) received from the planning system (130) of the AV.

## Description

### TECHNICAL FIELD

The instant specification generally relates to autonomous vehicles. More specifically, the instant specification relates to autonomous vehicle trajectory planning for robust fallback responses.

### BACKGROUND

Autonomous vehicles (AVs), whether fully autonomous or partially self-driving, often operate by planning a trajectory along which the AV may travel. Planning the trajectory can include sensing an outside environment with various sensors (e.g., radar, optical, audio, humidity, etc.). This outside environment may include other objects in the environment, some of which are mobile. Such objects can include other vehicles, cyclists, pedestrians, animals, etc.

### BRIEF DESCRIPTION OF THE DRAWINGS

The present disclosure is illustrated by way of examples, and not by way of limitation, and can be more fully understood with references to the following detailed description when considered in connection with the figures, in which:
**FIG. 1** depicts a block diagram of an example autonomous vehicle (AV) capable of AV trajectory planning for robust fallback responses, in accordance with some implementations of the present disclosure.
**FIG. 2** depicts a flowchart for an example method for AV trajectory planning for robust fallback responses, in accordance with some implementations of the present disclosure.
**FIG. 3** depicts a top-down view of a driving environment of the AV and showing representations of a planned trajectory and a fallback trajectory, in accordance with some implementations of the present disclosure.
**FIG. 4** depicts a top-down view of a driving environment of the AV and showing representations of a planned trajectory, a fallback trajectory, and a guide curve used to assist in generating the fallback trajectory, in accordance with some implementations of the present disclosure.
**FIG. 5** depicts another flowchart for an example method for AV trajectory planning for robust fallback responses, in accordance with some implementations of the present disclosure.
**FIG. 6** depicts a top-down view of a driving environment of the AV and showing representations of a planned trajectory and multiple fallback trajectories, in accordance with some implementations of the present disclosure.
**FIG. 7** depicts a block diagram of an example computer device capable of AV trajectory planning for robust fallback responses, in accordance with some implementations of the present disclosure.

### SUMMARY

In one implementation, disclosed is a method for autonomous vehicle (AV) trajectory planning for robust fallback responses. The method may include periodically receiving updates to a planned trajectory and updates to a fallback trajectory from a planning system of an AV. The planned trajectory may include a trajectory to a planned location of the AV, and the fallback trajectory may include a trajectory to a fallback stopping location in an environment of the AV. The method may include causing the AV to operate according to the updates to the planned trajectory. The method may include, upon determining that a threshold amount of time has passed since receiving a last update to the planned trajectory from the planning system of the AV, autonomously modifying the operation of the AV according to a last update of the fallback trajectory received from the planning system of the AV.

In another implementation, disclosed is a system for AV trajectory planning for robust fallback responses. The system may include a memory and one or more processing devices, coupled to the memory, configured to perform operations. The operations may include periodically receiving updates to a planned trajectory and updates to one or more fallback trajectories from a planning system of an AV. The planned trajectory may include a trajectory to a planned location of the AV, and each fallback trajectory of the one or more fallback trajectories may include a trajectory to a respective fallback stopping location in an environment of the AV. The operations may include causing the AV to operate according to the updates to the planned trajectory. The operations may include selecting a fallback trajectory of the one or more fallback trajectories based on a selection metric associated with the respective fallback trajectory. The operations may include, upon determining that a threshold amount of time has passed since receiving a last update to the planned trajectory from the planning system of the AV, autonomously modifying operation of the AV according to a last update of the selected fallback trajectory received from the planning system of the AV.

In another implementation, disclosed is a non-transitory computer-readable storage medium with executable instructions stored thereon. The executable instructions may cause one or more processing devices to perform operations. The operations may include periodically receiving updates to a planned trajectory and updates to one or more fallback trajectories from a planning system of an AV. The planned trajectory may include a trajectory to a planned location of the AV, and each fallback trajectory of the one or more fallback trajectories may include a trajectory to a respective fallback stopping location in an environment of the AV. The operations may include causing the AV to operate according to the updates to the planned trajectory. The operations may include selecting a fallback trajectory of the one or more fallback trajectories based on a selection metric associated with the respective fallback trajectory. The operations may include, upon determining that a threshold amount of time has passed since receiving a last update to the planned trajectory from the planning system of the AV, autonomously modifying operation of the AV according to a last update of the selected fallback trajectory received from the planning system of the AV.

### DETAILED DESCRIPTION

An autonomous vehicle or a vehicle deploying various driving assistance features (AV) can include a planning system that generates and updates a planned trajectory along which it may travel through an environment of the AV. The planning system may generate or update the planned trajectory using various sensors, such as radar, optical devices (e.g., cameras), etc. However, at some point while the AV is traveling through the environment around the AV, the planning system may fail to generate or update the planned trajectory. For example, one or more of the sensors may fail (e.g., due to a hardware or software failure) and may stop providing information to the planning system, or the planning system itself may fail (e.g., due to a software error or a hardware failure). When an AV fails to generate or update its planned trajectory, the AV will often respond by coming to a stop in the direction the AV is currently traveling.

This response has several disadvantages. For example, the AV coming to a stop can result in the AV stopping in an undesirable location, such as the middle of a road lane. This can lead to the AV remaining stationary in a location where other drivers do not expect to encounter a stationary vehicle, which can result in a dangerous situation. In addition, the above response does not take into account any predictions about other objects (such as other vehicles) in the environment around the AV or makes very basic predictions about such objects and how they may respond to the AV coming to a stop. The lack of accurate predictions about other objects can further increase a chance of an occurrence of a dangerous situation.

Aspects and implementations of the present disclosure address these and other challenges of existing AV systems. Specifically, the present disclosure describes an AV that includes a planning system that generates and updates (1) a planned trajectory for the AV, and (2) one or more fallback trajectories for the AV. A fallback trajectory may include a trajectory from the location of the AV to a fallback stopping location in an environment of the AV. The fallback stopping location may include a location determined by the AV to be a relatively safe place for the AV to stop (e.g., on the shoulder of a road). The planning system may generate the fallback trajectories based, at least in part, on predicted trajectories of objects in the environment around the AV. The planning system may provide the planned trajectory and the one or more fallback trajectories to a control system of the AV, which may control the AV according to the planned trajectory or a fallback trajectory. A fallback subsystem of the AV may determine that a threshold amount of time has passed since receiving an update to the planned trajectory (which may indicate that the planning system or one or more sensors of the AV have failed). Responsive to this, the fallback subsystem may select one of the fallback trajectories and cause the control system of the AV to operate the vehicle according to the selected fallback trajectory.

The advantages of the disclosed techniques and systems include, but are not limited to, operating an AV to follow a fallback trajectory if the AV encounters a failure. Rather than respond to a failure by simply stopping, the AV follows a predetermined fallback trajectory to a fallback stopping location. The fallback trajectory can take into account the predicted behavior of other objects around the AV. The fallback stopping location can be a location that is safer to stop at than a road lane (e.g., a shoulder of the road).

As used herein, the term "safe" may refer to a condition or state of low or minimum risk or a condition or state that is preferable under the given circumstances. The condition or state may not be free from all risk. For example, a safe fallback stopping location for an AV may refer to a location where the risk of a traffic accident or other adverse event is lower (e.g., the shoulder of a road) than another location (e.g., in a traffic lane of that same road).

In those instances where the description of implementations refers to AV, it should be understood that similar techniques can be used in various driver assistance systems that do not rise to the level of fully autonomous driving systems. More specifically, disclosed techniques can be used in Society of Automotive Engineers (SAE) Level 2 driver assistance systems that implement steering, braking, acceleration, lane centering, adaptive cruise control, etc., as well as other driver support. Likewise, the disclosed techniques can be used in SAE Level 3 driving assistance systems capable of autonomous driving under limited (e.g., highway) conditions. In such systems, fast and accurate detection and tracking of mobile objects can be used to inform the driver of the approaching objects, with the driver making the ultimate driving decisions (e.g., in SAE Level 2 systems), or to make certain driving decisions (e.g., in SAE Level 3 systems), such as reducing speed, changing lanes, etc., without requesting driver's feedback.

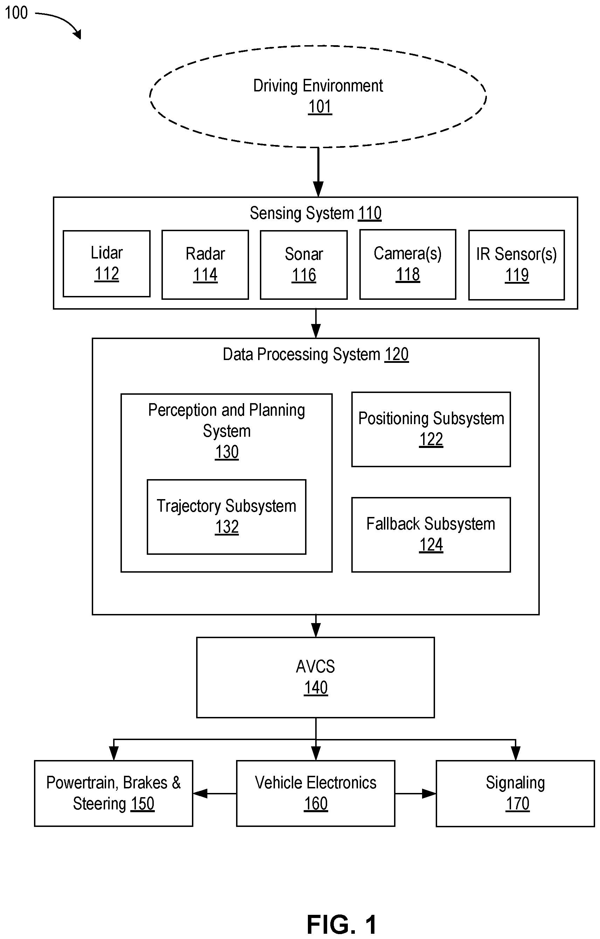

**FIG. 1** is a diagram illustrating components of an example AV 100 capable of AV trajectory planning for robust fallback responses, in accordance with some implementations of the present disclosure. AVs 100 can include motor vehicles (cars, trucks, buses, motorcycles, all-terrain vehicles, recreational vehicles, any specialized farming or construction vehicles, and the like), aircraft (planes, helicopters, drones, and the like), naval vehicles (ships, boats, yachts, submarines, and the like), or any other self-propelled vehicles (e.g., robots, factory or warehouse robotic vehicles, sidewalk delivery robotic vehicles, etc.) capable of being operated in a self-driving mode (without a human input or with a reduced human input).

An environment 101 around the AV 100 (sometimes referred to as the "driving environment") can include any objects (animated or non-animated) located outside the AV 100, such as roadways, buildings, trees, bushes, sidewalks, bridges, mountains, other vehicles, pedestrians, animals, and so on. The driving environment 101 can be urban, suburban, rural, and so on. In some implementations, the driving environment 101 can be an off-road environment (e.g., farming or other agricultural land). In some implementations, the driving environment 101 can be an indoor environment, (e.g., the environment of an industrial plant, a shipping warehouse, a hazardous area of a building, and so on). In some implementations, the driving environment 101 can be substantially flat, with various objects moving parallel to a surface (e.g., parallel to the surface of the Earth). In other implementations, the driving environment 101 can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, the "driving environment" can include any possible flying environment of an aircraft or a marine environment of a naval vessel. The objects of the driving environment 101 can be located at any distance from the AV 100, from close distances of several feet (or less) to several miles (or more).

As described herein, in a semi-autonomous or partially autonomous driving mode, even though the AV 100 assists with one or more driving operations (e.g., steering, braking and/or accelerating to perform lane centering, adaptive cruise control, advanced driver assistance systems (ADAS), or emergency braking), the human driver is expected to be situationally aware of the AV's 100 surroundings and supervise the assisted driving operations. Here, even though the AV 100 may perform all driving tasks in certain situations, the human driver is expected to be responsible for taking control as needed.

Although, for brevity and conciseness, various systems and methods may be described below in conjunction with AVs 100, similar techniques can be used in various driver assistance systems that do not rise to the level of fully autonomous driving systems. In the United States, the SAE have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver assistance systems that implement steering, braking, acceleration, lane centering, adaptive cruise control, etc., as well as other driver support. The disclosed systems and methods can be used in SAE Level 3 (L3) driving assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example AV 100 can include a sensing system 110. The sensing system 110 can include various electromagnetic (e.g., optical) and non-electromagnetic (e.g., acoustic) sensing subsystems and/or devices. The sensing system 110 can include a radar 114 (or multiple radars 114), which can be any system that utilizes radio or microwave frequency signals to sense objects within the driving environment 101 of the AV 100. The radar(s) 114 can be configured to sense both the spatial locations of the objects (including their spatial dimensions) and velocities of the objects (e.g., using Doppler shift technology). Hereinafter, "velocity" refers to both how fast the object is moving (the speed of the object) as well as the direction of the object's motion. The sensing system 110 can include a lidar 112, which can be a laser-based unit capable of determining distances to the objects and velocities of the objects in the driving environment 101. Each of the lidar 112 and radar 114 can include a coherent sensor, such as a frequency-modulated continuous-wave (FMCW) lidar or radar sensor. For example, radar 114 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple lidars 112 or radars 114 can be mounted on the AV 100.

As used herein, the term "object" or "objects" can include any entity, item, device, body, or article (animate or inanimate) located outside the AV 100, such as other vehicles, cyclists, pedestrians, animals, roadways, buildings, trees, bushes, sidewalks, bridges, mountains, piers, banks, landing strips, or other things.

Lidar 112 can include one or more light sources producing and emitting signals and one or more detectors of the signals reflected back from the objects. In some implementations, lidar 112 can perform a 360-degree scan in a horizontal direction. In some implementations, lidar 112 can be capable of spatial scanning along both the horizontal and vertical directions. In some implementations, the field of view can be up to 90 degrees in the vertical direction (e.g., with at least a part of the region above the horizon being scanned with radar signals). In some implementations, the field of view can be a full sphere (consisting of two hemispheres).

The sensing system 110 can further include one or more cameras 118 configured to capture images of the driving environment 101. The images can be two-dimensional projections of the driving environment 101 (or parts of the driving environment 101) onto a projecting surface (flat or non-flat) of the camera(s). Some of the cameras 118 of the sensing system 110 can be video cameras configured to capture a continuous (or quasi-continuous) stream of images of the driving environment 101. The sensing system 110 can also include one or more infrared (IR) sensors 119. The sensing system 110 can further include one or more sonars 116, which can be ultrasonic sonars, in some implementations.

The AV 100 can include a data processing system 120. The data processing system 120 may include one or more computers or computing devices. The data processing system 120 may include hardware or software that receives data from the sensing system 110, processes the received data, and determines how the AV 100 should operate in the driving environment 101. In some implementations, the data processing system 120 can receive non-electromagnetic data, such as audio data (e.g., ultrasonic sensor data, or data from a microphone picking up emergency vehicle sirens), temperature sensor data, humidity sensor data, pressure sensor data, meteorological data (e.g., wind speed and direction, precipitation data), and the like.

The data processing system 120 can include a perception and planning system 130. The perception and planning system 130 can be configured to detect and track objects in the driving environment 101 and to recognize the detected objects. For example, the perception and planning system 130 can analyze images captured by the cameras 118 and can be capable of detecting traffic light signals, road signs, roadway layouts (e.g., boundaries of traffic lanes, topologies of intersections, designations of parking places, and so on), presence of obstacles, and the like. The perception and planning system 130 can further receive radar sensing data (Doppler data and ToF data) and determine distances to various objects in the environment 101 and velocities (radial and, in some implementations, transverse) of such objects. In some implementations, the perception and planning system 130 can use radar data in combination with the data captured by the camera(s) 118.

The perception and planning system 130 may monitor how the driving environment 101 evolves with time, e.g., by keeping track of the locations and velocities of the animate objects (e.g., relative to the Earth and/or the AV 100) and predicting how various objects are to move in the future, over a certain time horizon, e.g., 1-10 seconds or more. The perception and planning system 130 can also receive information from a positioning subsystem 122, which can include a GPS transceiver and/or inertial measurement unit (IMU), configured to obtain information about the position of the AV 100 relative to Earth and its surroundings. The positioning subsystem 122 can use the positioning data, (e.g., GPS and IMU data) in conjunction with the sensing data to help accurately determine the location of AV 100 with respect to fixed objects of the driving environment 101 (e.g., roadways, lane boundaries, intersections, sidewalks, crosswalks, road signs, curbs, surrounding buildings, etc.).

In some implementations, the perception and planning system 130 may use the data generated by the perception and planning system 130, positional subsystem 122, and/or the other systems and components of data processing system 120 to plan how the AV 100 is to behave in various driving situations and environments. For example, the perception and planning system 130 can include a navigation subsystem for determining a global driving route to a destination point. The perception and planning system 130 can also include an obstacle avoidance subsystem for safe avoidance of various objects or other obstructions (rocks, stalled vehicles, a jaywalking pedestrian, and so on) within the driving environment 101 of the AV 100. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles.

In one or more implementations, the perception and planning system 130 may include a trajectory subsystem 132. The trajectory subsystem 132 may generate a path through the immediate driving environment 101. Generating a path through the driving environment 101 can include selecting a traffic lane, negotiating traffic congestion, choosing a place to make a U-turn, selecting a trajectory for a parking maneuver, and so on. In one implementation, the trajectory subsystem 132 may generate a planned trajectory through the immediate driving environment 101. The planned trajectory may include a primary or preferred trajectory that the AV 100 should follow as it travels towards the desired destination.

In some implementations, the trajectory subsystem 132 may generate one or more fallback trajectories. A fallback trajectory may include a trajectory through the driving environment 101 to a location where the AV 100 can come to a stop. The AV 100 may operate according to a fallback trajectory responsive to, e.g., the AV 100 experiencing some type of failure such that the AV 100 should not continue to drive and should stop in a safe location. In some implementations, the trajectory subsystem 132 generating a trajectory (either a planned trajectory, a fallback trajectory, or some other type of trajectory) may include the trajectory subsystem 132 generating an update to a previously generated trajectory. An update to a trajectory may include a modification of the previously generated trajectory, an extension of the previously generated trajectory, or some other type of update to the previously generated trajectory.

In some implementations, the data processing system 120 may include a fallback subsystem 124. The fallback subsystem 124 may be configured to determine whether one or more components of the AV 100 have experienced a failure such that the AV 100 should operate according to a fallback trajectory. In some implementations, the fallback subsystem 124 may determine that the AV 100 has experienced a failure responsive to a threshold amount of time passing since the perception and planning system 130 provided an update to the planned trajectory of the AV 100 or responsive to the fallback subsystem 124 receiving an error notification. Responsive to the fallback subsystem 124 determining that the AV 100 has experienced a failure, the fallback subsystem 124 may select a fallback trajectory and cause the AV control system 140 (discussed below) to autonomously modify the operation of the AV 100 according to the selected fallback trajectory.

In some implementations, the AV 100 may include an AV control system (AVCS) 140. The AVCS 140 may receive a trajectory or other data from the data processing system 120 and operate the AV 100 according to the received data. Algorithms and modules of the AVCS 140 can generate control outputs for use by various systems and components of the AV 100, such as the powertrain, brakes, and steering 150, vehicle electronics 160, signaling 170, and other systems and components not explicitly shown in FIG. 1. These systems and components may modify the operations of the AV 100 based on the control output. The powertrain, brakes, and steering 150 can include an engine (internal combustion engine, electric motor, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, an inside lighting system, a dashboard notification system, a passenger notification system, radio and wireless network transmission systems, and so on. Some of the instructions output by the AVCS 140 can be delivered directly to the powertrain, brakes, and steering 150 (or signaling 170) whereas other instructions output by the AVCS 140 may first be delivered to the vehicle electronics 160, which may generate commands to the powertrain, brakes, and steering 150 and/or signaling 170.

In one example, the AVCS 140 may receive data from the data processing system 120 indicating that an obstacle identified by the data processing system 120 is to be avoided by decelerating the vehicle until a safe speed is reached, followed by steering the vehicle around the obstacle. The AVCS 140 can output instructions to the powertrain, brakes, and steering 150 (directly or via the vehicle electronics 160) to: (1) reduce, by modifying the throttle settings, a flow of fuel to the engine to decrease the engine rotations per minute (RPM); (2) downshift, via an automatic transmission, the drivetrain into a lower gear; (3) engage a brake unit to reduce (while acting in concert with the engine and the transmission) the vehicle's speed until a safe speed is reached; and (4) perform, using a power steering mechanism, a steering maneuver until the obstacle is safely bypassed. Subsequently, the AVCS 140 can output instructions to the powertrain, brakes, and steering 150 to resume the previous speed settings of the vehicle.

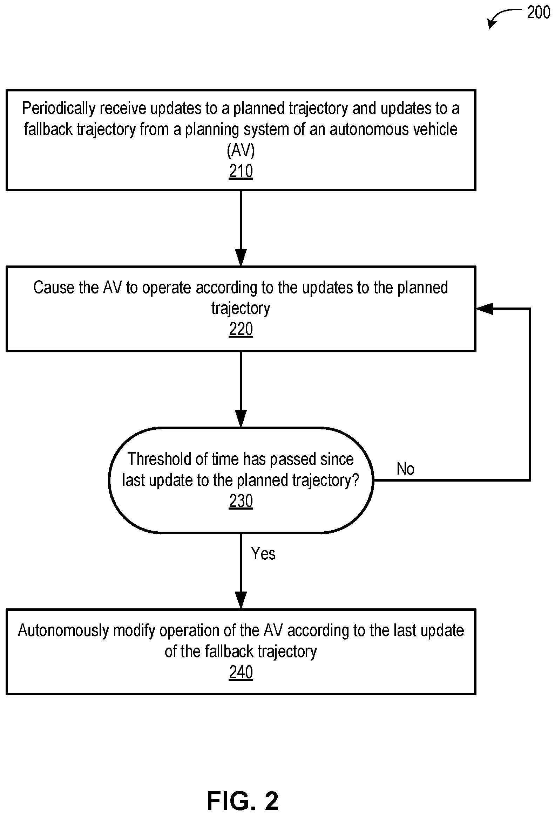

**FIG. 2** is a flowchart illustrating one embodiment of a method 200 for AV trajectory planning for robust fallback responses, in accordance with some implementations of the present disclosure. A processing device, having one or more central processing units (CPU(s)), one or more graphics processing units (GPU(s)), and/or memory devices communicatively coupled to the CPU(s) and/or GPU(s), can perform the method 200 and/or each of their individual functions, routines, subroutines, or operations. The method 200 can be directed to systems and components of a vehicle. In some implementations, the vehicle can be an AV, such as the AV 100 of FIG. 1. In some implementations, the vehicle can be a driver-operated vehicle equipped with driver assistance systems, e.g., Level 2 or Level 3 driver assistance systems, that provide limited assistance with specific vehicle systems (e.g., steering, braking, acceleration, etc. systems) or under limited driving conditions (e.g., highway driving). In certain implementations, a single processing thread can perform the method 200. Alternatively, two or more processing threads can perform the method 200, each thread executing one or more individual functions, routines, subroutines, or operations of the method 200. In an illustrative example, the processing threads implementing the method 200 can be synchronized (e.g., using semaphores, critical sections, and/or other thread synchronization mechanisms). Alternatively, the processing threads implementing the method 200 can be executed asynchronously with respect to each other. Various operations of the method 200 can be performed in a different (e.g., reversed) order compared with the order shown in FIG. 2. Some operations of the method 200 can be performed concurrently with other operations. Some operations can be optional.

At block 210, in one implementation, processing logic periodically receives updates to a planned trajectory and updates to a fallback trajectory from a planning system of an AV. The planning system may include the perception and planning system 130. The AV may include the AV 100. In some implementations, the planned trajectory may include a trajectory to a planned location of the AV 100. The fallback trajectory may include a trajectory to a fallback stopping location in an environment 101 of the AV 100. In one or more implementations, the trajectory subsystem 132 or the perception and planning system 130 may generate the updates to the planned trajectory and the fallback trajectory and may provide the updates to the data processing system 120.

As discussed above, in some implementations, the trajectory subsystem 132 of the AV 100 may generate a planned trajectory from the location of the AV 100 to a planned location. The planned location may include a location along the path to the desired destination of the AV 100. Generating the planned trajectory may include generating updates to a previously generated version of the planned trajectory.

In some implementations, the perception and planning system 130 may determine a fallback stopping location. A fallback stopping location may include a location in the driving environment 101 where it may be safe for the AV 100 to stop. The perception and planning system 130 may determine a fallback stopping location based on one or more stopping location factors.

A stopping location factor may include a location of the fallback stopping location. The location may include a shoulder of a road in the environment 101 of the AV 100. The location may include a specific portion of the shoulder of the road. The portion of the shoulder may be within a predetermined distance of the road. For example, the portion of the shoulder may be within 1 foot (approximately 0.3 meters) from the road, 2 feet (approximately 0.6 meters) from the road, 3 feet (approximately 0.9 meters) from the road, or some other distance. A shorter distance from the road may result in the AV 100 experiencing fewer lateral forces. The portion of the shoulder may be at least a predetermined distance from a barrier that is next to the shoulder (e.g., a concrete barrier that separates the shoulder from a non-road portion of the driving environment 101). The predetermined distance may be 1 foot, 2 feet, 3 feet, or some other distance. The location may include a gore region of a road in the environment 101 of the AV 100.

In some cases, a fallback stopping location may include a center portion of a road lane in the environment 101 of the AV 100. For example, the AV 100 may be located in the middle lane of a five-lane road where traffic on the road is at a stop or moving very slowly. It may not be feasible for the AV 100 to navigate through the stopped or slow-moving traffic to a shoulder of the road, thus, in this case, a safe fallback stopping location may be the center of the lane that the AV 100 is currently driving in. The AVCS 140 may activate one or more components of the signaling 170 to indicate that the AV 100 is stopped (e.g., hazard warning flashers).

In some implementations, a stopping location factor may include whether the AV 100 can reduce its velocity to 0 (i.e., the AV 100 can come to a complete stop) at the fallback stopping location within a threshold amount of time. The threshold amount of time may be 10 seconds, 5 seconds, 3 seconds, 15 seconds, or some other amount of time.

In some implementations, the perception and planning system 130 may select a deceleration value (e.g., -3 m/s²), determine the stopping distance based on that deceleration, and identify a location that is the determined stopping distance from the current location of the AV 100. If the identified location complies with one or more of the stopping location factors, the perception and planning system 130 may determine the location as a fallback stopping location. In some implementations, the perception and planning system 130 may select multiple deceleration values (e.g., -3 m/s², -4 m/s², -5 m/s², and -6 m/s²) and determine a stopping distance for each deceleration, and identify one or more locations that are the determined stopping distances from the current location of the AV 100. The perception and planning system 130 may select one of those locations as the fallback stopping location.

In some implementations, the perception and planning system 130 may use an artificial intelligence (AI) model to determine a fallback stopping location. In those instances where the description of implementations refers to AI models, it should be understood that an AI model can refer to a variety of AI models. For example, an AI model can include an artificial neural network (ANN), which can include multiple nodes ("neurons") arranged in one or more layers, and a neuron may be connected to one or more neurons via one or more edges ("synapses"). The synapses may perpetuate a signal from one neuron to another, and a weight, bias, or other configuration of a node or synapse may adjust a value of the signal. The ANN can undergo training to adjust the weights or adjust other features of the ANN. Such training may include inputting trajectory information of one or more objects, and other information, into the ANN and adjusting the ANN's features in response to an output of the ANN. An ANN may include a deep learning ANN, which may include an ANN with a large number of neurons, synapses, or layers. An AI model may include another type of AI model, such as clustering, decision trees, Bayesian networks, or the like.

In some implementations, the AI model may accept, as input, data from the sensing system 110, an embedding based on data from the sensing system 110, or other data. The AI model may execute on the input data and may generate an output. The output may include a fallback stopping location.

In one or more implementations, the trajectory subsystem 132 may generate a fallback trajectory from the AV 100 to the fallback stopping location. A fallback trajectory may include a spline curve that generates a smooth trajectory from the location of the AV 100 to the fallback stopping location. The spline curve may include a cubic curvature parameterized spline. In some implementations, the fallback trajectory may include a piecewise curvature and velocity spline. The piecewise curvature and velocity spline may include a second-order quadratic curvature when parameterized by distance. The piecewise curvature and velocity spline may include a sixth-order curvature when parameterized by time. In some implementations, the piecewise curvature may be generated using a piecewise curvature function that is a second-order function of time.

In one implementation, block 210 includes receiving updates to the fallback trajectory. The fallback trajectory may include the planned trajectory. For example, an initial portion of the fallback trajectory may include the planned trajectory, and the fallback trajectory may include a trajectory that extends beyond the planned trajectory. Thus, in some implementations, at block 210, receiving updates to the planned trajectory and updates to the fallback trajectory may include receiving updates to the fallback trajectory.

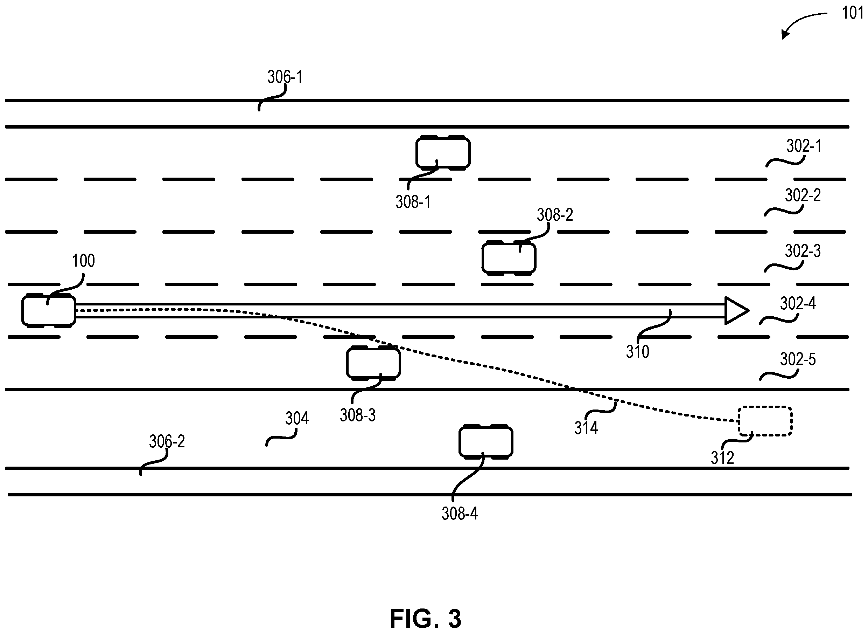

**FIG. 3** depicts an example driving environment 101 overlayed with an example planned trajectory and an example fallback trajectory. The driving environment 101 may include the AV 100. The driving environment 101 may include one or more road lanes 302-1, ..., 302-5. The driving environment 101 may include a shoulder 304 next to the rightmost road lane 302-5. The driving environment 101 may include a concrete barrier 306-1 to the left of the leftmost road lane 302-1 and another concrete barrier to the right of the shoulder 304. The driving environment 101 may include multiple vehicles 308-1, . . ., 308-4, some of which (308-1, . . ., 308-3) are traveling on the road lanes 302-1, ..., 302-5 and some of which (308-4) are parked on the shoulder 304.

As can be seen in FIG. 3, the trajectory subsystem 132 of the AV 100 may have generated a planned trajectory 310 for the AV 100, represented in FIG. 3 by a solid arrow. The perception and planning system 130 may have determined a fallback stopping location 312, and the trajectory subsystem 132 may have generated a fallback trajectory 314 (represented in FIG. 3 by the dotted line) from the AV 100 to the fallback stopping location 312. The trajectory subsystem 132 may have generated the fallback trajectory 314 based on the predicted trajectories of other objects in the driving environment 101. For example, although the fallback trajectory 314 passes close to the vehicle 308-3, the perception and planning system 130 may have predicted that the vehicle 308-3 will no longer be in that location by the time the AV 100 reaches that location on the fallback trajectory 314.

In some implementations, the planned trajectory 310 and the fallback trajectory 314 match for a predetermined amount of time or for a predetermined distance. For example, the fallback trajectory 314 and the planned trajectory 310 may match for the first 600 ms of the trajectories 310, 314, and afterwards, the two trajectories 310, 314 may diverge. The two trajectories 310, 314 may overlap in case the perception and planning system 130 is able to regain the ability to generate an update to the planned trajectory 310 during the overlap, which may prevent the AV 100 from diverging from the planned trajectory 310 if the AV 100 experiences a failure for only a short amount of time. As an example, in FIG. 3, the planned trajectory 310 and the fallback trajectory 314 match for the first portion of the two trajectories 310, 314, and afterwards they diverge. In some implementations, the perception and planning system 130 may adjust the predetermined amount of time or the predetermined distance based on the environment 101 of the AV 100. For example, the perception and planning system 130 may increase the predetermined amount of time or the predetermined distance responsive to an increased number of objects in the environment 101. In some implementations, the perception and planning system 130 may adjust the predetermined amount of time or the predetermined distance based on the velocity of the AV 100. For example, the perception and planning system 130 may increase the predetermined amount of time or the predetermined distance responsive to an increased velocity of the AV 100.

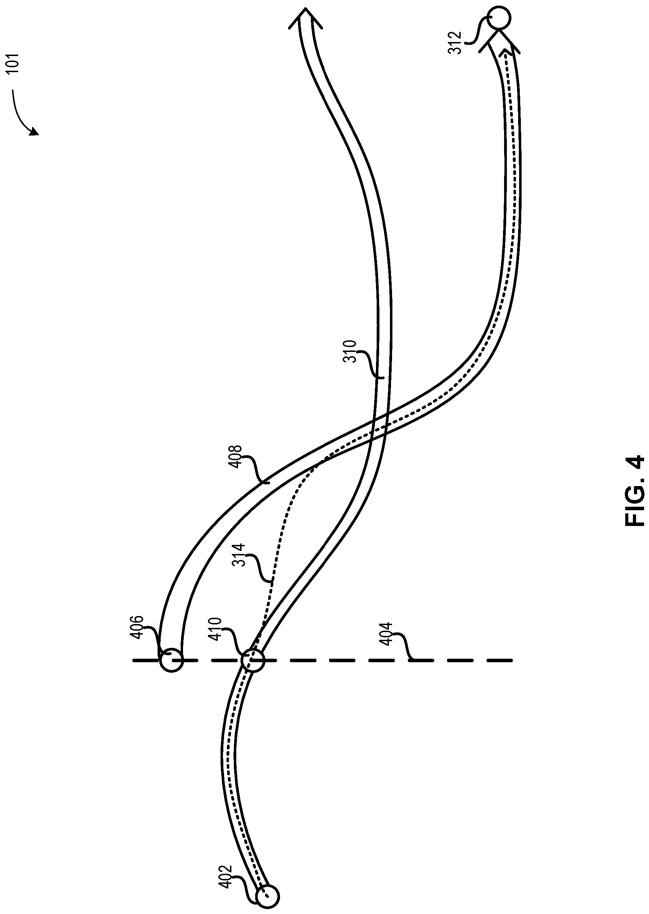

In some implementations, generating the fallback trajectory 314 may include the trajectory subsystem 132 using a guide curve to assist in generating the fallback trajectory 314. **FIG. 4** is a top-down view of a representation of the driving environment 101 and depicts representations of a planned trajectory 310, a fallback trajectory 314, and a guide curve used to generate the fallback trajectory 314. In FIG. 4, the AV 100 travels forward by traveling from left to right, and the AV 100 travels laterally by moving up or down.

Point 402 depicts the location of the AV 100 at the current time. At the current time, the trajectory subsystem 132 may not have yet finished generating the planned trajectory 310 of the AV 100. However, based on a previous update to the planned trajectory 310 or based on a current velocity of the AV 100, the trajectory subsystem 132 may estimate that the AV 100 will be located, after a threshold amount of time, somewhere along the line 404. The threshold amount of time may include the threshold amount of time for which the planned trajectory 310 and the fallback trajectory 314 may match, as discussed above. The trajectory subsystem 132 may estimate that the AV 100, after the threshold amount of time, will be located at the point 406. The trajectory subsystem 132 may generate a guide curve 408 from the point 406 to the fallback stopping location 312. The guide curve may include an estimate of a path the AV 100 may take in order to travel to the fallback stopping location 312. The trajectory subsystem 132 may generate the fallback trajectory 314 using the guide curve 408 as a guide.

Responsive to the trajectory subsystem 132 generating the planned trajectory 310, the trajectory subsystem 132 may generate the fallback trajectory 314 based on the guide curve 408. This may include the fallback trajectory 314 matching the planned trajectory 310 until the point 410. The point 410 may include the location of the AV 100 on the planned trajectory 310 after the threshold amount of time. The trajectory subsystem 132 may then generate the remainder of the fallback trajectory 314 by aligning the fallback trajectory 314 with the guide curve 408 until the fallback trajectory 314 reaches the fallback stopping location 312. The trajectory subsystem 132, the perception and planning system 130, or the fallback subsystem 124 may adjust or refine the fallback trajectory 314 to comply with one or more directives, as discussed below (e.g., directives related to deceleration, jerk, etc.).

In some implementations, the trajectory subsystem 132 may generate the planned trajectory 310 periodically. For example, the trajectory subsystem 132 may generate the planned trajectory 310 every 100 milliseconds (ms). The trajectory subsystem 132 may generate a fallback trajectory 314 periodically. For example, the trajectory subsystem 132 may generate a fallback trajectory 314 every 100 ms. In some implementations, the trajectory subsystem 132 may generate the updates to the planned trajectory 310 at least partially in parallel with the updates to a fallback trajectory 314.

In some implementations, a fallback trajectory 314 may comply with one or more fallback trajectory directives. The fallback trajectory directives may recommend that the fallback trajectory 314 have or indicate one or more characteristics. A fallback trajectory directive may recommend that the fallback trajectory 314 reduce the velocity of the AV 100 to 0 at the fallback stopping location 312 within a threshold amount of time. The fallback trajectory directives may recommend that the AV 100 maintain an initial velocity for a predetermined amount of time. After the predetermined amount of time, the fallback trajectory 314 may reduce the velocity of the AV 100. The reduction in velocity may result in the AV 100 reaching a velocity of 0 at the fallback stopping location 312. In some implementations, the fallback trajectory 314 may indicate that the AV 100 should maintain the initial velocity for the predetermined amount of time in case the perception and planning system 130 is able to regain the ability to generate the planned trajectory 310. As an example, the AV 100 may be traveling along the planned trajectory 310 at 60 miles per hour (MPH) (approximately 97 kilometers per hour (KPH)). The trajectory subsystem 132 may not have generated an update to the planned trajectory 310 within a threshold amount of time (e.g., 600 ms). In response, the AV 100 may autonomously modify its operation according to the fallback trajectory 314. The fallback trajectory 314 may indicate that the AV 100 should continue to travel at 60 MPH for a second threshold amount of time (e.g., 2 seconds) before beginning to reduce the AV's 100 velocity. However, the trajectory subsystem 132 may, 1 second after switching to the fallback trajectory 314, generate an update to the planned trajectory 310. The AV 100 may then autonomously modify its operation according to the updated planned trajectory 310 without having reduced its velocity.

In some implementations, the fallback trajectory directives may include the fallback trajectory 314 conforming with a predetermined kinematic limit of the AV 100. For example, the fallback trajectory directives may indicate that the fallback trajectory 314 is to be free of deceleration (lateral, longitudinal, or some other direction) below a threshold deceleration amount. For example, the threshold deceleration may be -5.0 m/s². The fallback directives may indicate that the fallback trajectory 314 is to be free of jerk (lateral, longitudinal, or some other direction) above or below a threshold amount. For example, the threshold jerk amount may be 1.0 m/s³. The fallback directives may indicate that the fallback trajectory 314 is to be free of acceleration (lateral, longitudinal, or some other direction) above a threshold acceleration amount.

In one implementation, processing logic may adjust the fallback trajectory 314 to conform to a predetermined kinematic limit of the AV 100. For example, if the fallback trajectory 314 includes a deceleration below a threshold amount of -5.0 m/s² (e.g., -5.5 m/s²), the perception and planning system 130 may adjust the fallback trajectory 314 such that at no point on the fallback trajectory 314 does the deceleration fall below the threshold (e.g., by moving the fallback stopping location 312 further away from the AV 100 in order to give the AV 100 more time to decelerate). In another example, if the fallback trajectory 314 includes a jerk above a threshold amount of 1.0 m/s³ (e.g., 1.3 m/s³), the perception and planning system 130 may adjust the fallback trajectory 314 such that at no point on the fallback trajectory 314 does the jerk go above the threshold (e.g., by adjusting the shape of the spline curve to be smoother).

In some implementations, the trajectory subsystem 132 may generate a fallback trajectory 314 based on, at least in part, a previous version of the planned trajectory 310. For example, the fallback trajectory 314 may match a previous version of the planned trajectory 310 for a predetermined amount of time or a predetermined distance. This may aid the trajectory subsystem 132 in generating an acceptable fallback trajectory 314 because the previous version of the planned trajectory 310 (on which a fallback trajectory 314 may be partially based) was already determined by the perception and planning system 130 to be an acceptable trajectory.

Returning to FIG. 2, in one implementation, at block 220, processing logic causes the AV 100 to operate according to the updates to the planned trajectory 310. In one implementation, the data processing system 120 may receive the updates to the planned trajectory 310 and the updates to the fallback trajectory 314. The data processing system 120 may provide the updates to the planned trajectory 310 to the AVCS 140, and the AVCS 140 may autonomously modify the operation of the AV 100 according to the last update of the planned trajectory 310.

At block 230, in some implementations, processing logic determines that a threshold amount of time has passed since receiving a last update to the planned trajectory 310 from the planning system of the AV 100. In some implementations, the fallback subsystem 124 may track the amount of time that has passed since the data processing system 120 received an update to the planned trajectory 310. In response to the amount of time exceeding the threshold amount of time, the fallback subsystem 124 may determine that the AV 100 has experienced a failure, and the method 200 may move to block 240. In response to the amount of time not exceeding the threshold amount of time, the AVCS 140 may return to block 220 and continue to cause the AV 100 to operate according to the updates to the planned trajectory 310.

At block 240, in one implementation, processing logic autonomously modifies operation of the AV 100 according to a last update of the fallback trajectory 314 received from the planning system of the AV 100. In some implementations, the data processing system 120 may provide the fallback trajectory 314 to the AVCS 140. The fallback subsystem 124 may provide a notification to the AVCS 140 indicating that the AVCS 140 is to operate the AV 100 according to the fallback trajectory 314. In one or more implementations, the data processing system 120 may also provide the planned trajectory 310 to the AVCS 140.

In one or more implementations, block 240 includes modifying operation of the AV 100 in response to receiving further data from the data processing system 120 or some other system of the AV 100. For example, responsive to a collision detection subsystem of the data processing system 120, the perception and planning system 130, or some other system of the AV 100 detecting a possible collision on the fallback trajectory 314, the AVCS 140 may execute a collision avoidance operation. The collision avoidance operation may include engaging a brakes 150 component of the AV 100, adjusting the steering 150 of the AV 100, or some other action.

In some implementations, at block 220, processing logic may cause the AV 100 to operate according to the updates to the fallback trajectory 314 (instead of the planned trajectory 310). Since the fallback trajectory 314 and the planned trajectory 310 may match for a predetermined amount of time or a predetermined distance, if the AVCS 140 operates the AV 100 according to the updated fallback trajectory 314 before the AV 100 reaches the point where the planned trajectory 310 and the fallback trajectory 314 diverge, the AV 100 will travel along the same trajectory it would have had the AV 100 operated according to the planned trajectory 310.

In some implementations, at block 230, processing logic may receive an error notification to indicate that the AV 100 has experienced a failure and that the method 200 should proceed to block 240. In one implementation, the fallback subsystem 124 may receive the error notification. The data processing system 120 may send an error notification responsive to, for example, a component of the sensing system 110 ceasing to function, ceasing to respond, or sending an error notification to the data processing system 120. The data processing system 120 may send an error notification to the fallback subsystem 124 responsive to the perception and planning system 130 ceasing to function, ceasing to respond, or sending an error notification to the data processing system 120. The data processing system 120 may send an error notification responsive to detecting a failure of the AV 100 in some other manner.

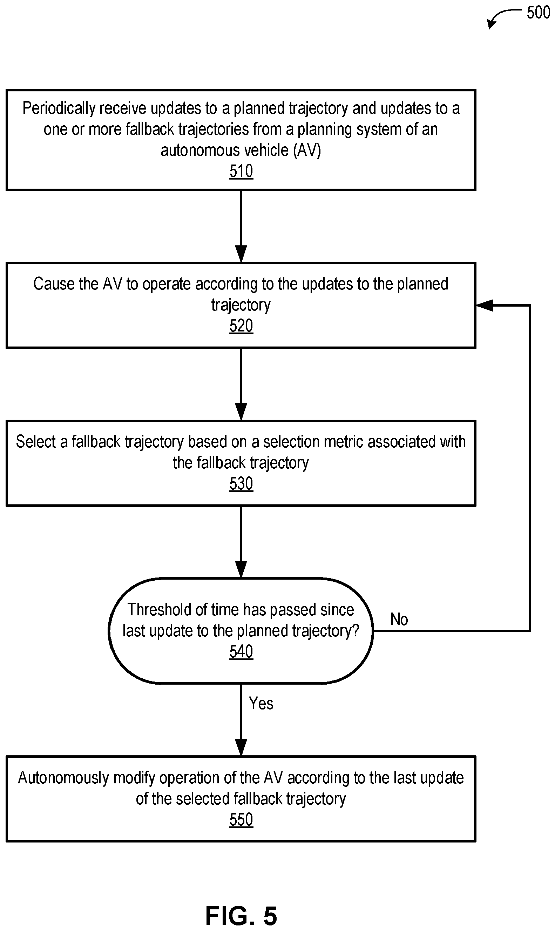

**FIG. 5** is a flowchart illustrating one embodiment of a method 500 for AV trajectory planning for robust fallback responses, in accordance with some implementations of the present disclosure. A processing device, having one or more CPU(s), one or more GPU(s), and/or memory devices communicatively coupled to the CPU(s) and/or GPU(s), can perform the method 500 and/or each of their individual functions, routines, subroutines, or operations. The method 500 can be directed to systems and components of a vehicle. In some implementations, the vehicle can be an AV, such as the AV 100 of FIG. 1. In some implementations, the vehicle can be a driver-operated vehicle equipped with driver assistance systems, e.g., Level 4 or Level 3 driver assistance systems, that provide limited assistance with specific vehicle systems (e.g., steering, braking, acceleration, etc. systems) or under limited driving conditions (e.g., highway driving). In certain implementations, a single processing thread can perform the method 500. Alternatively, two or more processing threads can perform the method 500, each thread executing one or more individual functions, routines, subroutines, or operations of the method 500. In an illustrative example, the processing threads implementing the method 500 can be synchronized (e.g., using semaphores, critical sections, and/or other thread synchronization mechanisms). Alternatively, the processing threads implementing the method 500 can be executed asynchronously with respect to each other. Various operations of the method 500 can be performed in a different (e.g., reversed) order compared with the order shown in FIG. 5. Some operations of the method 500 can be performed concurrently with other operations. Some operations can be optional.

At block 510, processing logic periodically receives updates to a planned trajectory 310 and updates to one or more fallback trajectories 314-1, ..., 314-n from a planning system of an AV 100. The planning system may include the perception and planning system 130 of the AV 100. The planned trajectory 310 may include a trajectory to a planned location of the AV 100. Each fallback trajectory 314 of the one or more fallback trajectories 314-1, ..., 314-n, may include a trajectory to a respective fallback stopping location 312 in an environment 101 of the AV 100.

In some implementations, periodically receiving updates to the planned trajectory 310 may include similar functionality to some of the functionality of block 210 of the method 200 of FIG. 2. In some implementations, periodically receiving updates to the one or more fallback trajectories 314-1, ..., 314-n may include similar functionality to some of the functionality of block 210. For example, one or more of the fallback trajectories 314-1, . . ., 314-n may comply with one or more fallback trajectory directives, may be based on a previous version of the planned trajectory 310, may be adjusted, etc. However, instead of receiving a single fallback trajectory 314 as discussed in block 210, block 510 may include receiving one or more fallback trajectories 314-1, ..., 314-n. In one or more implementations, the perception and planning system 130 may identify a predetermined number of fallback stopping locations 312-1, . . . , 312-n. The predetermined number of fallback stopping locations 312-1, . . . , 312-n may include 1, 2, 3, 4, 5, or 6 or more fallback stopping locations 312-1, ..., 312-n.

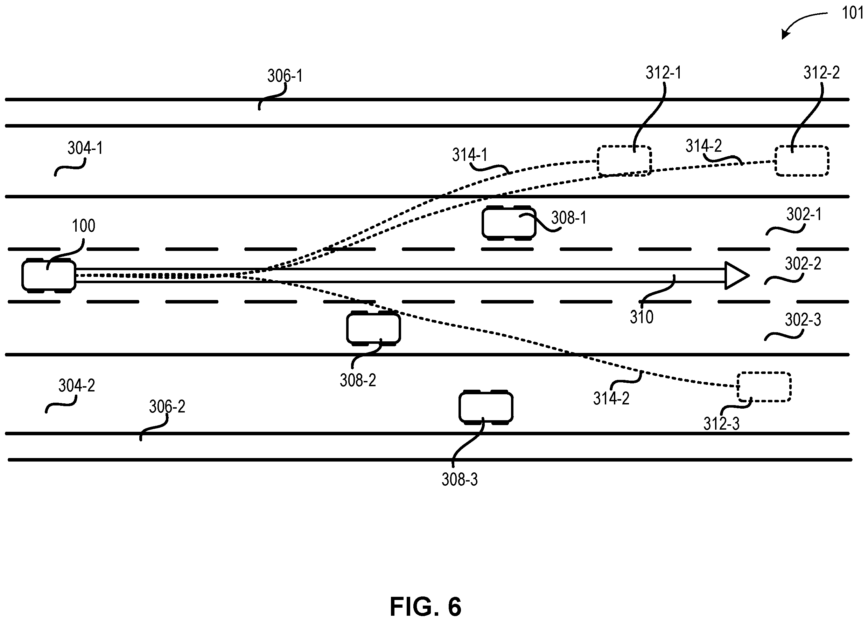

**FIG. 6** depicts another example driving environment 101 overlayed with an example planned trajectory 310 and multiple example fallback trajectories 314-1, ..., 314-3. The driving environment 101 of FIG. 6 may include one or more components of the driving environment 101 of FIG. 3. For example, the driving environment 101 of FIG. 6 may include the AV 100; road lanes 302-1, ..., 302-3; shoulders 304-1, 304-2; concrete barriers 306-1, 306-2; and vehicles 308-1, ..., 308-3. As can also be seen in FIG. 6, the perception and planning system 130 of the AV 100 may have generated a planned trajectory 310. The perception and planning system 130 may have also determined multiple fallback stopping locations 312-1, . . ., 312-3 and a respective fallback trajectory 314-1, . . ., 314-3 to each fallback stopping location 312-1, ..., 312-3.

In some implementations, multiple fallback trajectories 314-1, ..., 314-n may lead to the same fallback stopping location 312-1. This may provide the AV 100 multiple options to reach the same fallback stopping location 312. In one implementation, each fallback trajectory 314 of the multiple fallback trajectories 314-1, ..., 314-n may lead to a unique fallback stopping location 312-1, ..., 312-n. In one or more implementations, the planned trajectory 310 and the one or more fallback trajectories 314-1, ..., 314-n may match for a predetermined amount of time or for a predetermined distance. For example, the fallback trajectories 314-1, ..., 314-n and the planned trajectory 310 may match for the first 600 ms of the trajectories 310, 314-1, ..., 314-n, and afterwards, the planned trajectory 310 and the one or more fallback trajectories 314-1, ..., 314-n may diverge. Different fallback trajectories 314-1, ..., 314-n may diverge at different times or distances than other fallback trajectories 314-1, ..., 314-n.

Returning to FIG. 5, at block 520, processing logic causes the AV 100 to operate according to the updates to the planned trajectory 310. Block 520 may include functionality similar to functionality of block 220 of the method 200.

At block 530, processing logic selects a fallback trajectory 314 of the one or more fallback trajectories 314-1, ..., 314-n based on a selection metric associated with the respective fallback trajectory 314. In one implementation, the perception and planning system 130 may provide the one or more fallback trajectories 314-1, ..., 314-n to the fallback subsystem 124, and the fallback subsystem 124 may select a fallback trajectory 314 from the one or more fallback trajectories 314-1, ..., 314-n based on a selection metric associated with the selected fallback trajectory 314.

In some implementations, the fallback subsystem 124 may calculate a selection metric for each fallback trajectory 314 of the one or more fallback trajectories 314-1, ..., 314-n. The fallback subsystem 124 may calculate the selection metric for a fallback trajectory 314 based on one or more selection factors. In one implementation, a selection factor may include a distance to the fallback stopping location 312 of the fallback trajectory 314. In some implementations, the selection metric may be higher responsive to a longer distance to the fallback stopping location 312. This may be because a longer distance allows the AV 100 to decelerate at a lower rate, which may be more comfortable for passengers of the AV 100. Conversely, a shorter distance to the fallback stopping location 312 may result in a lower selection metric.

In some implementations, a selection factor may include whether the fallback trajectory 314 crosses a predicted trajectory of an object in the environment 101 of the AV 100. The fallback trajectory 314 crossing a predicted trajectory of an object may include the fallback trajectory 314 and the predicted trajectory of the object overlapping or at least partially matching. In one or more implementations, the trajectory subsystem 132 may generate a predicted trajectory of an object based on the AV 100 operating according to the fallback trajectory 314, predicted behavior of other objects in the driving environment 101, or other data. In some implementations, the perception and planning system 130 may use an AI model to generate a predicted trajectory for an object. The AI model may use data from the sensing system 110, an embedding based on data from the sensing system 110, the fallback trajectory 314 (or some other proposed or simulated trajectory for the AV 100), or other data as input. The AI model may execute based on the input and may generate a predicted trajectory for an object in the driving environment 101.

In one implementation, the selection metric of the fallback trajectory 314 may be lower responsive to the fallback trajectory 314 and the predicted trajectory of the object crossing. This may be because there may be a risk of a collision between the AV 100 and the object if their trajectories cross. However, in some implementations, the selection metric of the fallback trajectory 314 may not be lower responsive to the fallback trajectory 314 and the predicted trajectory of the object crossing if the trajectories indicate a low or no likelihood of a collision.

In one or more implementations, a selection factor may include lateral movement of the fallback trajectory 314. Lateral movement of the AV 100 may include the AV 100 moving to the AV's 100 left or moving to the AV's 100 right. In some implementations, the selection metric of the fallback trajectory 314 may be lower responsive to the fallback trajectory 314 including lateral movement. The more lateral movement the fallback trajectory 314 includes, the lower the selection metric may be. This may be because lateral movement may cause more discomfort to passengers of the AV 100 and because lateral movement may result in more opportunities for collisions with other objects in the driving environment 101. In some implementations, lateral movement may include acceleration/deceleration or jerk in the lateral directions of the AV 100.

In some implementations, a selection factor may include the type of location of the fallback stopping location 312. For example, the shoulder of the road may result in a higher selection metric than the middle of a road lane 302. In some implementations, a selection factor may include whether the AV 100 following the fallback trajectory 314 would result in the AV 100 trajectory not complying with traffic laws or predefined driving practices.

In one or more implementations, the fallback subsystem 124 may calculate the selection metric for each fallback trajectory 314 based on the one or more selection factors. The fallback subsystem 124 may use a cost function that uses the selection factors as input. The fallback subsystem 124 may use a weighted function that uses the selection factors and weights as inputs. The fallback subsystem 124 may use other functions or operations to calculate the selection metric for each fallback trajectory 314. After calculating the selection metric of each fallback trajectory 314, the fallback subsystem 124 may select the fallback trajectory 314 with the lowest cost as calculated by the cost function, the highest selection metric, etc. The fallback subsystem 124 may provide the selected fallback trajectory 314 to the data processing system 120. The data processing system 120 may provide the planned trajectory 310 and the selected fallback trajectory 314 to the AVCS 140.

In some implementations, the fallback subsystem 124 or the perception and planning system 130 may adjust the selected fallback trajectory 314 (e.g., as discussed above, by modifying the fallback trajectory 314 to conform to a predetermined kinematic limit of the AV 100) before providing the fallback trajectory 314 to the AVCS 140. In one or more implementations, the fallback subsystem 124 or the perception and planning system 130 may adjust one or more of the fallback trajectories 314-1, ..., 314-n before calculating the selection metrics of the one or more fallback trajectories 314-1, ..., 314-n.

At block 540, processing logic determines that a threshold amount of time has passed since receiving a last update to the planned trajectory 310 from the planning system of the AV 100. Block 540 may include functionality similar to the functionality of block 230 of the method 200. At block 550, processing logic autonomously modifies the operation of the AV 100 according to a last update of the selected fallback trajectory 314 received from the planning system of the AV 100. Block 550 may include functionality similar to the functionality of block 240 of the method 200.

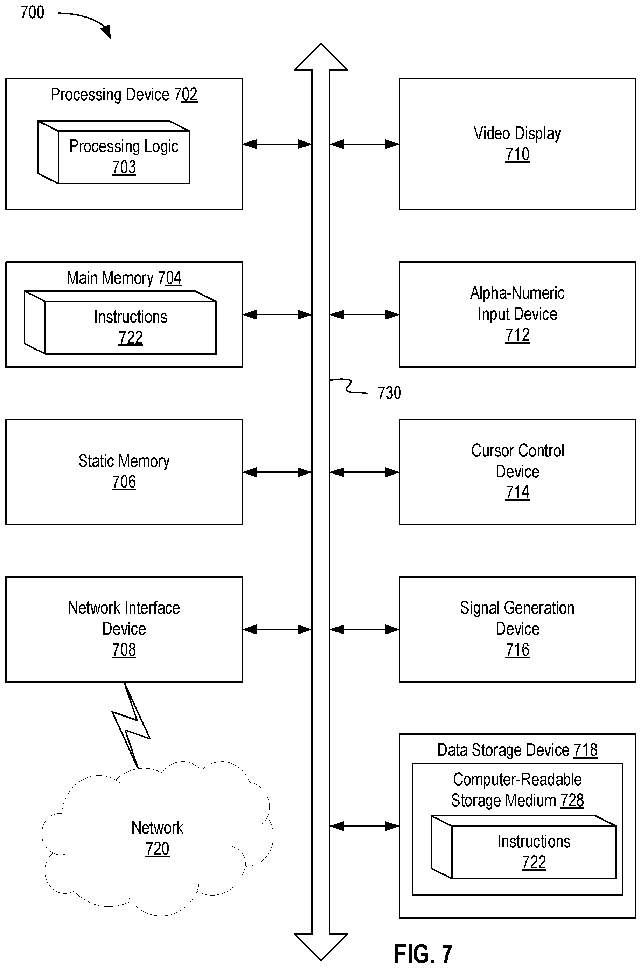

**FIG. 7** depicts a block diagram of an example computer device 700 capable of AV trajectory planning for robust fallback responses, in accordance with some implementations of the present disclosure. Example computer device 700 can be connected to other computer devices in a local area network (LAN), an intranet, an extranet, and/or the Internet. Computer device 700 can operate in the capacity of a server in a client-server network environment. Computer device 700 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 700 can include a processing device 702 (also referred to as a processor or CPU), a main memory 704 (e.g., read-only memory (ROM), flash memory, dynamic random access memory (DRAM) such as synchronous DRAM (SDRAM), etc.), a static memory 706 (e.g., flash memory, static random access memory (SRAM), etc.), and a secondary memory (e.g., a data storage device 718), which can communicate with each other via a bus 730.

Processing device 702 (which can include processing logic 703) represents one or more general-purpose processing devices such as a microprocessor, CPU, or the like. More particularly, processing device 702 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 can also be one or more special-purpose processing devices such as a GPU, an application specific integrated circuit (ASIC), a field programmable gate array (FPGA), a digital signal processor (DSP), network processor, or the like. In accordance with one or more aspects of the present disclosure, processing device 702 can be configured to execute instructions performing methods 200 or 500 for AV trajectory planning for robust fallback responses.

Example computer device 700 can further comprise a network interface device 708, which can be communicatively coupled to a network 720. A network interface device 708 may include a network card, a network interface controller, or some other network interface. The network 720 may include a LAN, an intranet, an extranet, the Internet, a modem, a router, a switch, or some other network or network device. In some embodiments, the computer device 700 may be in data communication with other systems or device over the network 720. Example computer device 700 can further comprise a video display 710 (e.g., a liquid crystal display (LCD), a touch screen, or a cathode ray tube (CRT)), an alphanumeric input device 712 (e.g., a keyboard), a cursor control device 714 (e.g., a mouse), and an acoustic signal generation device 716 (e.g., a speaker).

Data storage device 718 can include a computer-readable storage medium (or, more specifically, a non-transitory computer-readable storage medium) 728 on which is stored one or more sets of executable instructions 722. In accordance with one or more aspects of the present disclosure, executable instructions 722 can comprise executable instructions performing the methods 200 or 500.

Executable instructions 722 can also reside, completely or at least partially, within main memory 704 and/or within processing device 702 during execution thereof by example computer device 700, main memory 704 and processing device 702 also constituting computer-readable storage media. Executable instructions 722 can further be transmitted or received over a network via network interface device 708.

While the computer-readable storage medium 728 is shown in FIG. 7 as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

In some cases, certain components of the AV 100 (e.g., the sensing system 110, the data processing system 120, the AVCS 140, or other components) may include a computer device 700.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "adjusting," "causing," "comparing," "creating," "generating," "performing," "receiving," "modifying," "selecting," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general-purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general-purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.
The specification includes the following subject-matter expressed in the form of clauses 1-23.
1. A method, comprising:
   periodically receiving updates to a planned trajectory and updates to a fallback trajectory from a planning system of an autonomous vehicle (AV), wherein the planned trajectory is a trajectory to a planned location of the AV and the fallback trajectory is a trajectory to a fallback stopping location in an environment of the AV;
   causing the AV to operate according to the updates to the planned trajectory; and
   upon determining that a threshold amount of time has passed since receiving a last update to the planned trajectory from the planning system of the AV, autonomously modifying operation of the AV according to a last update of the fallback trajectory received from the planning system of the AV.
2. The method of clause 1, wherein the fallback stopping location comprises at least one of:
   a shoulder of a road in the environment of the AV;
   a gore region of a road lane in the environment of the AV; or
   a center portion of a road lane in the environment of the AV.
3. The method of clause 1 or 2, wherein the fallback trajectory reduces a velocity of the AV to 0 at the fallback stopping location within a threshold amount of time.
4. The method of clause 3, wherein the threshold amount of time comprises 10 seconds.
5. The method of any of clauses 1-4, wherein the planned trajectory and the fallback trajectory match for a predetermined amount of time.
6. The method of any of clauses 1-5, further comprising adjusting the fallback trajectory to conform to a predetermined kinematic limit of the AV.
7. The method of any of clauses 1-6, wherein the fallback trajectory indicates that the AV is to maintain a velocity for a predetermined amount of time.
8. A system, comprising:
   a memory; and
   one or more processing devices, coupled to the memory, configured to perform operations comprising:
      periodically receiving updates to a planned trajectory and updates to one or more fallback trajectories from a planning system of an autonomous vehicle (AV), wherein the planned trajectory is a trajectory to a planned location of the AV and each fallback trajectory of the one or more fallback trajectories are a trajectory to a respective fallback stopping location in an environment of the AV;
      causing the AV to operate according to the updates to the planned trajectory;
      selecting a fallback trajectory of the one or more fallback trajectories based on a selection metric associated with the respective fallback trajectory; and
      upon determining that a threshold amount of time has passed since receiving a last update to the planned trajectory from the planning system of the AV, autonomously modifying operation of the AV according to a last update of the
   selected fallback trajectory received from the planning system of the AV.
9. The system of clause 8, wherein:
   a fallback stopping location of the one or more fallback stopping locations of the one or more fallback trajectories comprises a portion of a shoulder of a road in the environment of the AV; and
   the portion of the shoulder is within a predetermined distance of a road lane of the road.
10. The system of clause 8 or 9, wherein each fallback trajectory of the one or more fallback trajectories comprises generating a trajectory free of:
   deceleration below a threshold deceleration amount; and
   jerk above a threshold jerk amount.
11. The system of any of clauses 8-10, wherein each fallback trajectory of the one or more fallback trajectories comprises a trajectory based, at least in part, on a previous version of the planned trajectory of the AV.
12. The system of any of clauses 8-11, wherein the selection metric associated with the respective fallback trajectory is based on at least one of:
   a distance to the fallback stopping location of the respective fallback trajectory;
   whether the respective fallback trajectory crosses a predicted trajectory of an object in the environment of the AV; or
   a lateral movement of the respective fallback trajectory.
13. The system of any of clauses 8-12, wherein the planned trajectory and the selected fallback trajectory match for a predetermined amount of time.
14. The system of clause 13, wherein the operations further comprise adjusting the predetermined amount of time based on the environment of the AV.
15. The system of any of clauses 8-14, wherein periodically receiving the updates to the planned trajectory and the updates to the one or more fallback trajectories comprises receiving the updates to the planned trajectory at least partially in parallel with the updates to the one or more fallback trajectories.
16. A non-transitory computer-readable storage medium with executable instructions stored thereon, wherein the executable instructions cause a processing device to:
   periodically receiving updates to a planned trajectory and updates to one or more fallback trajectories from a planning system of an autonomous vehicle (AV), wherein the planned trajectory is a trajectory to a planned location of the AV and each fallback trajectory of the one or more fallback trajectories are a trajectory to a fallback stopping location in an environment of the AV;
   causing the AV to operate according to the updates to the planned trajectory; and
   selecting a fallback trajectory of the one or more fallback trajectories based on a selection metric associated with the respective fallback trajectory; and
   upon determining that a threshold amount of time has passed since receiving a last update to the planned trajectory from the planning system of the AV, autonomously modifying operation of the AV according to a last update of the selected fallback trajectory received from the planning system of the AV.
17. The computer-readable storage medium of clause 16, wherein a fallback stopping location of the one or more fallback stopping locations comprises at least one of:
   a shoulder of a road in the environment of the AV; or
   a center portion of a road lane in the environment of the AV.
18. The computer-readable storage medium of clause 16 or 17, wherein each fallback trajectory of the one or more fallback trajectories reduces a velocity of the AV to 0 at the respective fallback stopping location within a threshold amount of time.
19. The computer-readable storage medium of any of clauses 16-18, wherein the selection metric associated with the respective fallback trajectory is based on at least one of:
   a distance to the fallback stopping location of the respective fallback trajectory;
   whether the respective fallback trajectory crosses a predicted trajectory of an object in the environment of the AV; or
   a lateral movement of the respective fallback trajectory.
20. The computer-readable storage medium of any of clauses 16-19, wherein the executable instructions further cause the processing device to:
   generate a guide curve; and
   generate a fallback trajectory of the one or more fallback trajectories based on the guide curve.
21. A system, comprising:
   a memory; and
   one or more processing devices, coupled to the memory, configured to perform operations comprising the method of any of clauses 1-7.
22. A non-transitory computer-readable storage medium with executable instructions stored thereon, wherein the executable instructions cause a processing device to perform the method of any of clauses 1-7.
23. Computer executable instructions which, when executed by one or more processing devices, cause the one or more processing devices to perform the method of any of clauses 1-7.

## Claims

1. A method, comprising:
periodically receiving updates to a planned trajectory and updates to a fallback trajectory from a planning system of an autonomous vehicle (AV), wherein the planned trajectory is a trajectory to a planned location of the AV and the fallback trajectory is a trajectory to a fallback stopping location in an environment of the AV;
causing the AV to operate according to the updates to the planned trajectory; and
upon determining that a threshold amount of time has passed since receiving a last update to the planned trajectory from the planning system of the AV, autonomously modifying operation of the AV according to a last update of the fallback trajectory received from the planning system of the AV.

2. The method of claim 1, wherein the fallback stopping location comprises at least one of:
a shoulder of a road in the environment of the AV;
a gore region of a road lane in the environment of the AV; or
a center portion of a road lane in the environment of the AV.

3. The method of claim 1 or 2, wherein the fallback trajectory reduces a velocity of the AV to 0 at the fallback stopping location within a threshold amount of time.

4. The method of any of claims 1-3, wherein the planned trajectory and the fallback trajectory match for a predetermined amount of time; and/or wherein the fallback trajectory indicates that the AV is to maintain a velocity for a predetermined amount of time.

5. The method of any preceding claim, further comprising adjusting the fallback trajectory to conform to a predetermined kinematic limit of the AV.

6. A system, comprising:
a memory; and
one or more processing devices, coupled to the memory, configured to perform operations comprising:
periodically receiving updates to a planned trajectory and updates to one or more fallback trajectories from a planning system of an autonomous vehicle (AV), wherein the planned trajectory is a trajectory to a planned location of the AV and each fallback trajectory of the one or more fallback trajectories are a trajectory to a respective fallback stopping location in an environment of the AV;
causing the AV to operate according to the updates to the planned trajectory;
selecting a fallback trajectory of the one or more fallback trajectories based on a selection metric associated with the respective fallback trajectory; and
upon determining that a threshold amount of time has passed since receiving a last update to the planned trajectory from the planning system of the AV, autonomously modifying operation of the AV according to a last update of the selected fallback trajectory received from the planning system of the AV.

7. The system of claim 6, wherein:
a fallback stopping location of the one or more fallback stopping locations of the one or more fallback trajectories comprises a portion of a shoulder of a road in the environment of the AV; and
the portion of the shoulder is within a predetermined distance of a road lane of the road.

8. The system of claim 6 or 7,
wherein each fallback trajectory of the one or more fallback trajectories comprises generating a trajectory free of:
deceleration below a threshold deceleration amount; and
jerk above a threshold jerk amount;
and/or wherein each fallback trajectory of the one or more fallback trajectories comprises a trajectory based, at least in part, on a previous version of the planned trajectory of the AV.

9. The system of any of claims 6-8, wherein the selection metric associated with the respective fallback trajectory is based on at least one of:
a distance to the fallback stopping location of the respective fallback trajectory;
whether the respective fallback trajectory crosses a predicted trajectory of an object in the environment of the AV; or
a lateral movement of the respective fallback trajectory.

10. The system of any of claims 6-9, wherein the planned trajectory and the selected fallback trajectory match for a predetermined amount of time.

11. The system of claim 10, wherein the operations further comprise adjusting the predetermined amount of time based on the environment of the AV.

12. The system of any of claims 6-11, wherein periodically receiving the updates to the planned trajectory and the updates to the one or more fallback trajectories comprises receiving the updates to the planned trajectory at least partially in parallel with the updates to the one or more fallback trajectories.

13. A non-transitory computer-readable storage medium with executable instructions stored thereon, wherein the executable instructions cause a processing device to:
periodically receiving updates to a planned trajectory and updates to one or more fallback trajectories from a planning system of an autonomous vehicle (AV), wherein the planned trajectory is a trajectory to a planned location of the AV and each fallback trajectory of the one or more fallback trajectories are a trajectory to a fallback stopping location in an environment of the AV;
causing the AV to operate according to the updates to the planned trajectory; and
selecting a fallback trajectory of the one or more fallback trajectories based on a selection metric associated with the respective fallback trajectory; and
upon determining that a threshold amount of time has passed since receiving a last update to the planned trajectory from the planning system of the AV, autonomously modifying operation of the AV according to a last update of the selected fallback trajectory received from the planning system of the AV.

14. The computer-readable storage medium of claim 13,
wherein a fallback stopping location of the one or more fallback stopping locations comprises at least one of:
a shoulder of a road in the environment of the AV; or
a center portion of a road lane in the environment of the AV;
and/or wherein each fallback trajectory of the one or more fallback trajectories reduces a velocity of the AV to 0 at the respective fallback stopping location within a threshold amount of time;
and/or wherein the selection metric associated with the respective fallback trajectory is based on at least one of:
a distance to the fallback stopping location of the respective fallback trajectory;
whether the respective fallback trajectory crosses a predicted trajectory of an object in the environment of the AV; or
a lateral movement of the respective fallback trajectory.

15. The computer-readable storage medium of claim 13 or 14, wherein the executable instructions further cause the processing device to:
generate a guide curve; and
generate a fallback trajectory of the one or more fallback trajectories based on the guide curve.
